# EUROPÄISCHE PATENTANMELDUNG

(11) **EP 2 108 903 A1**
(43) Veröffentlichungstag der Anmeldung: **14.10.2009**
(21) Anmeldenummer: 09155343.8
(22) Anmeldetag: 17.03.2009
(51) Int. Cl.: F25B 9/14

(54) **Verfahren und Vorrichtung zur CO2-Verflüssigung**

(30) Priorität: 09.04.2008 DE 102008018000
(71) Anmelder: Siemens Aktiengesellschaft, 80333 München (DE)
(72) Erfinder: Danov, Vladimir, 91058 Erlangen (DE); Gromoll, Bernd, 91083 Baiersdorf (DE)

(57) **Zusammenfassung**

Die Erfindung betrifft ein Verfahren und eine Vorrichtung zur CO2-Verflüssigung bzw. zur CO2-Trennung. Dabei wird erfindungsgemäß der thermoakustische Effekt ausgenutzt, um mit Hilfe der Abwärme eines Kraftwerks eine Arbeitsleistung für einen Kompressor zum Verdichten eines Arbeitsmediums, insbesondere zum Verdichten eines CO2 enthaltenden Rauchgases, zu erzeugen und/oder um das Arbeitsmedium abzukühlen.

## Beschreibung

Die Erfindung betrifft ein Verfahren und eine Vorrichtung zur Verflüssigung eins Arbeitsmediums, insbesondere zur CO2-Verflüssigung.

Zur Reduzierung der CO2-Emissionen von Kraftwerken sind verschiedene Verfahren bekannt, bei denen CO2 von den Brenn- oder Rauchgasen des Kraftwerks abgetrennt wird, um das CO2 anschließend separat zu speichern bzw. zu lagern. Die Trennung ist notwendig, da das Abgas der Kraftwerke nur zu einem relativ geringen Teil aus CO2 besteht: Den größten Teil bildet Stickstoff, der neben dem Sauerstoff in der Umgebungsluft enthalten ist. Da es nicht sinnvoll ist, den harmlosen Stickstoff geologisch zu speichern, muss das CO2 zunächst vom Stickstoff und ggf. anderen im Abgas enthaltenen Stoffen wie bspw. Schwefeloxiden (SOₓ) getrennt werden. Beispiele für Trennverfahren wären Absorptionsverfahren mit Hilfe flüssiger Lösungsmittel, Festkörperadsorption, Membranverfahren und Hochtemperaturverfahren.

Um das abgeschiedene CO2 transportfähig zu machen und speichern zu können, wird das CO2 verflüssigt. Gängige Verfahren weisen jedoch den Nachteil auf, dass die Abtrennung von CO2 mit der anschließenden Verflüssigung sehr energieintensiv ist. Das einzige bislang bekannte CO2-Trennverfahren, das flüssiges CO2 direkt liefern kann, ist ein Tieftemperatur- bzw. kryogenes Verfahren, welches darauf basiert, dass CO2 bei niedrigen Temperaturen auskondensiert. Auch dieses Verfahren ist sehr energieaufwändig.

Den bekannten Verfahren ist demnach ein vergleichsweise hoher Energiebedarf gemein, so dass ein schlechter Gesamtwirkungsgrad des Kraftwerks resultiert.

Aufgabe der Erfindung ist es daher, ein Verfahren und eine Vorrichtung für ein Kraftwerk zum Verflüssigen eines Arbeitsmediums, insbesondere zur CO2-Verflüssigung, anzugeben, wobei die Energiebilanz bestehender Kraftwerke mit Anlagen zur CO2-Verflüssigung verbessert werden soll. Darauf aufbauend ist es eine weitere Aufgabe der Erfindung, eine Vorrichtung und ein Verfahren zum Abtrennen von CO2 aus dem Arbeitsmedium anzugeben.

Diese Aufgaben werden durch die in den unabhängigen Ansprüchen angegebenen Erfindungen gelöst. Vorteilhafte Ausgestaltungen ergeben sich aus den abhängigen Ansprüchen.

Bei dem erfindungsgemäßen Verfahren wird CO2 kryogen in flüssiger Form aus einem Arbeitsmedium, insbesondere aus einem Rauchgas eines Kraftwerks, abgetrennt und so transportfähig gemacht. Dabei werden thermoakustische Maschinen verwendet, um das Rauchgas zu verdichten und abzukühlen. Der besondere Vorteil des Verfahrens und der Vorrichtung liegt darin, dass die Abwärme des Kraftwerks unter Ausnutzung des thermoakustischen Effekts zur Erzeugung einer Arbeitsleistung P für einen Kompressor und/oder zur Erzeugung von Kälte verwendet wird, um das Arbeitsmedium zu verflüssigen.

Beim sog. thermoakustischen Effekt werden zunächst durch eine Schallquelle, bspw. durch einen Lautsprecher, Schallwellen in einem Wärmeübertragungsmedium erzeugt wie es z.B. in DE 43 03 052 A1 beschrieben wird. Das Wärmeübertragungsmedium befindet sich in einem Resonanzrohr, in dessen Längsrichtung die Schallwellen abgestrahlt werden. Der thermoakustische Effekt besteht nun im Wesentlichen darin, dass zwischen bestimmten Positionen in der Längsrichtung des Rohres ein Temperaturgradient entsteht. Über geeignete Wärmetauscher, die an eben diesen Positionen angeordnet sind, kann Wärme an die Umgebung abgegeben bzw. Wärme aus der Umgebung aufgenommen werden.

Der thermoakustische Effekt lässt sich bspw. in der Weise umkehren, dass über entsprechende Wärmetauscher ein Temperaturgradient erzeugt wird, was zur Folge hat, dass in dem Wärmeübertragungsmedium Druckschwankungen ausgelöst werden.

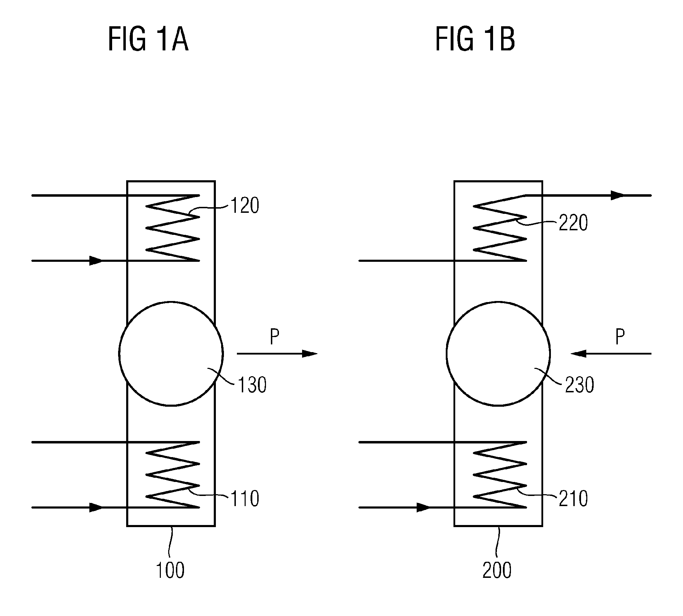

Die Figur 1 zeigt schematisch zwei Möglichkeiten der Nutzung des thermoakustischen Effekts. In der Figur 1a wird in einer Vorrichtung zur Leistungserzeugung 130, wie sie oben bereits kurz beschrieben wurde, dadurch eine Arbeitsleistung P erzeugt, dass ein erster Wärmetauscher 110 und ein zweiter Wärmetauscher 120 einer ersten thermoakustischen Maschine 100 von Medien durchflossen werden, die unterschiedliche Temperaturen aufweisen. In der Figur 1b dagegen arbeitet eine zweite thermoakustische Maschine 200 in an sich bekannter Weise als Kältemaschine in der Art, dass ein dritter Wärmetauscher 210 von einem Medium mit hoher Temperatur durchflossen wird, während eine Vorrichtung zur Leistungseinspeisung 230 Druckschwankungen in dem Wärmeübertragungsmedium der zweiten thermoakustischen Maschine erzeugt. Dies hat zur Folge, dass aufgrund des thermoakustischen Effekts ein einen vierten Wärmetauscher 220 durchfließendes Medium gekühlt wird.

Die vorliegende Erfindung nutzt den thermoakustischen Effekt zur Erzeugung einer mechanischen oder elektrischen Arbeitsleistung in der Weise, dass in einer ersten thermoakustischen Maschine über einen ersten Wärmetauscher, der von einem Medium mit hoher Temperatur durchflossen wird, und einen zweiten Wärmetauscher, der von einem kühleren Medium durchflossen wird, in einem Wärmeübertragungsmedium Druckschwankungen erzeugt werden. Das den ersten Wärmetauscher durchfließende, heiße Medium wird dabei vorteilhafterweise der Abwärme des Kraftwerks entnommen. Die Abwärme des Kraftwerks kann dabei hinter einem Brenner und/oder hinter einer Turbine des Kraftwerks entnommen werden. Insbesondere handelt es sich hierbei um die heißen Rauchgase und/oder den Dampf des Kraftwerks. Das den zweiten Wärmetauscher durchfließende Medium kann durch übliche Kühlmittel, d.h. Kühlwasser oder Kühlluft, realisiert sein.

Die Druckschwankungen im Wärmeübertragungsmedium wirken auf eine Vorrichtung zur Leistungserzeugung 130, die eine Komponente beinhaltet, die durch die Druckschwankungen in Bewegung versetzt wird. Dies kann im einfachsten Fall ein Kolben sein, der entsprechend den Druckschwankungen in einem Zylinder eine lineare Bewegung durchführt, die bspw. über eine Kurbelwelle in eine Rotation umgewandelt wird. Die Vorrichtung zur Leistungseinspeisung 230 kann dabei im Prinzip aufgebaut sein wie die Vorrichtung zur Leistungserzeugung, mit dem Unterschied, dass der Kolben bzw. die Kurbelwelle im Falle der Vorrichtung zur Leistungseinspeisung 230 von außen angetrieben wird, dass also eine Arbeitsleistung P zugeführt wird.

Die so erzeugte Arbeitsleistung P kann in Form von mechanischer oder elektrischer Leistung weitergeleitet werden. In der vorliegenden Anwendung zur Verflüssigung eines Arbeitsmediums wird die Arbeitsleistung an einen Kompressor übertragen, der das Arbeitsmedium verdichtet. Optimalerweise reicht allein die mit der ersten thermoakustischen Maschine erzeugbare Arbeitsleistung aus, den Kompressor anzutreiben. Anderenfalls ist es denkbar, eine weitere Energiequelle zur Versorgung des Kompressors hinzuzuschalten.

Alternativ oder zusätzlich zum Einsatz der ersten thermoakustischen Maschine nutzt die vorliegende Erfindung den thermoakustische Effekt wie im Zusammenhang mit der Figur 1b beschrieben in einer Kälteanlage: Dabei besteht das den dritten Wärmetauscher 210 durchfließende, heiße Medium -wie im Fall des ersten Wärmetauschers 110- aus den heißen Rauchgasen und/oder dem Dampf aus der Abwärme des Kraftwerks. Das den vierten Wärmetauscher durchfließende Medium ist das bereits im Kompressor verdichtete Arbeitsmedium, das im vierten Wärmetauscher gekühlt wird.

Die Erfindung bietet demnach den besonderen Vorteil, dass der Energiebedarf bzw. die Energiebilanz einer Gesamtanlage bestehend aus dem Kraftwerk und einer Anlage zur CO2-Abtrennung bzw. -Verflüssigung verbessert wird, da die zum Verdichten und/oder zum Abkühlen des das CO2 enthaltenden Arbeitsmediums benötigte Energie der ansonsten nicht genutzten Abwärme des Kraftwerks entnommen wird.

Weitere Vorteile, Merkmale und Einzelheiten der Erfindung ergeben sich aus dem im Folgenden beschriebenen Ausführungsbeispiel sowie anhand der Zeichnungen.

Dabei zeigt:
- Figur 1a: eine erste Nutzungsmöglichkeit des thermoakustischen Effekts,
- Figur 1b: eine zweite Nutzungsmöglichkeit des thermoakustischen Effekts,
- Figur 2: eine erfindungsgemäße Vorrichtung zum Verflüssigen eines Arbeitsmediums und
- Figur 3: eine weitere erfindungsgemäße Vorrichtung zum Verflüssigen eines Arbeitsmediums.

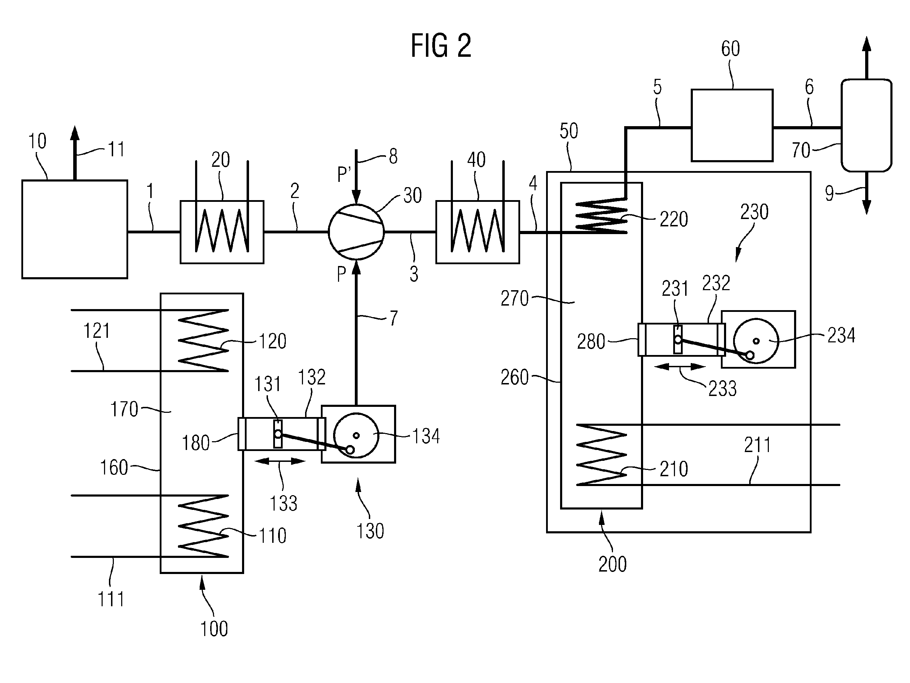

Die Figur 2 zeigt eine Vorrichtung zur Verflüssigung eines Arbeitsmediums, insbesondere zur CO2-Verflüssigung. In einer von einem Kraftwerk 10 kommenden Leitung 1 wird das Arbeitsmedium, das im vorliegenden Ausführungsbeispiel einer Anlage zur CO2-Verflüssigung aus Rauchgasen und CO2 besteht, zu einem Rauchgasabkühler 20 geführt. Von dort gelangt das Arbeitsmedium über eine Leitung 2 in einen Kompressor 30, wo es verdichtet wird. Das verdichtete Arbeitsmedium wird anschließend über eine Leitung 3 einem Trockner 40 zugeführt, um insbesondere Wasser aus dem Arbeitsmedium zu entfernen, um dann über eine Leitung 4 in eine Kälteanlage 50 zu gelangen. Die Kälteanlage 50 umfasst u.a. einen Wärmetauscher 220, im Folgenden bezeichnet als vierter Wärmetauscher 220, den das Arbeitsmedium durchläuft und dabei abgekühlt wird. Im Anschluss an die Kälteanlage 50 gelangt das Arbeitsmedium über eine Leitung 5 in eine weitere Kälteanlage 60 und von dort über eine Leitung 6 in eine Abscheidevorrichtung 70. In der Abscheidevorrichtung 70 wird flüssiges CO2 von CO2-armen Restgasen getrennt.

Für die meisten der Baugruppen der oben beschriebenen Vorrichtung zur CO2-Verflüssigung, d.h. als Rauchgasabkühler 20, als Kompressor 30, als Trockner 40, als weitere Kälteanlage 60 und als Abscheidevorrichtung 70, können aus dem Stand der Technik bekannte Standardbaugruppen verwendet werden. Diese Baugruppen und deren Funktionsweise sind nicht Gegenstand der vorliegenden Erfindung und werden daher nicht weiter beschrieben.

Erfindungsgemäß wird zum Erzeugen der vom Kompressor 30 zum Verdichten des Arbeitsmediums benötigten Arbeitsleistung P eine erste thermoakustische Maschine 100 eingesetzt. Zusätzlich oder alternativ hierzu wird in der Kälteanlage 50 eine zweite thermoakustische Maschine 200 verwendet.

Die erste thermoakustische Maschine 100 weist einen ersten Behälter 160 auf, der bspw. als Resonanzrohr ausgebildet sein kann und der einen ersten Wärmetauscher 110, einen zweiten Wärmetauscher 120 und ein erstes Wärmeübertragungsmedium 170, bspw. Luft, umfasst. Der erste 110 und der zweite Wärmetauscher 120 stehen über das erste Wärmeübertragungsmedium 170 in thermischem Kontakt.

Der erste Wärmetauscher 110 wird nun von einem ersten Medium und der zweite Wärmetauscher 120 von einem zweiten Medium durchflossen, wobei die Temperatur des ersten Mediums höher ist als die Temperatur des zweiten Mediums. Insbesondere wird der erste Wärmetauscher 110 erfindungsgemäß über eine Zuleitung 111 mit der Abwärme des Kraftwerks 10, insbesondere mit heißem Rauchgas und/oder Dampf, gespeist. Hierzu ist die Zuleitung 111 mit einer Abwärmeleitung 11 des Kraftwerks 10 verbunden, wobei Abwärme des Kraftwerks 10 bspw. hinter einem Brenner und/oder hinter einer Turbine des Kraftwerks 10 entnommen werden kann. Der zweite Wärmetauscher 120 wird über eine Zuleitung 121 mit einem Kühlmittel, insbesondere mit Kühlluft oder Kühlwasser, versorgt.

Der Temperaturgradient zwischen dem ersten 110 und dem zweiten Wärmetauscher 120 resultiert aufgrund des thermoakustischen Effekts darin, dass im Resonanzrohr 160 in dem ersten Wärmeübertragungsmedium 170 Druckschwankungen erzeugt werden. Eine Vorrichtung zur Leistungserzeugung 130 ist mit der ersten thermoakustischen Maschine 100 derart gekoppelt, dass sich diese Druckschwankungen auf die Vorrichtung zur Leistungserzeugung 130 auswirken können.

Die Vorrichtung zur Leistungserzeugung 130 kann bspw. einen Kolben 131, einen Zylinder 132 und eine Kurbelwelle 134 umfassen, wobei der Zylinder 132 an eine Öffnung 180 im Resonanzrohr 160 angesetzt ist, so dass durch die Druckschwankungen Kräfte auf den Kolben 131 erzeugt werden. Der Kolben 131 bewegt sich dadurch in Richtung des Pfeils 133, treibt die Kurbelwelle 134 an und erzeugt so eine Arbeitsleistung P, die schließlich über eine Leitung 7 an den Kompressor 30 übertragen wird. Dabei ist denkbar, mittels der Kurbelwelle 134 einen Generator (nicht dargestellt) zur Stromerzeugung zu betreiben und mit dem erzeugten Strom den Kompressor 30 zu versorgen. In dem Fall ist die Leitung 7 eine stromführende Verbindung. Alternativ kann die Kurbelwelle 134 mechanisch mit einer Welle des Kompressors 30 verbunden sein, so dass ein direkter Antrieb des Kompressors stattfindet. In diesem Fall stellt die Leitung 7 eine mechanische Verbindung zwischen der Vorrichtung zur Leistungserzeugung 130 und dem Kompressor 30 dar. Generell lässt sich verallgemeinern, dass die Vorrichtung zur Leistungserzeugung 130 in der Lage ist, die Druckschwankungen im Resonanzrohr 160 aufzunehmen und sie in eine Arbeitsleistung P umzusetzen. Einem Fachmann sind derartige Vorrichtungen zur Leistungserzeugung bekannt. Bspw. kann ein Linearkompressor verwendet werden, die die Vorrichtung zur Leistungserzeugung 130 und den Kompressor 30 in sich vereint. Ebenso sind dem Fachmann Mittel und Wege bekannt, die erzeugte Arbeitsleitung P an den Kompressor 30 zu übertragen.

Über eine optionale Zuleitung 8 kann dem Kompressor 30 ggf. eine zusätzlich Arbeitsleistung P' zugeführt werden, falls die durch die erste thermoakustische Maschine 100 erzeugte Arbeitsleistung P nicht ausreicht, um die zu zerlegende Luft hinreichend zu verdichten.

Alternativ oder zusätzlich zum Einsatz der ersten thermoakustischen Maschine 100 kann eine zweite thermoakustische Maschine 200 als Kältemaschine eingesetzt werden. Die zweite thermoakustische Maschine 200 wird zum Abkühlen des im Kompressor 30 verdichteten und im Trockner 40 vom Wasser befreiten Arbeitsmediums verwendet. Hierzu weist die zweite thermoakustische Maschine 200 einen zweiten Behälter bzw. ein zweites Resonanzrohr 260 auf, das einen dritten Wärmetauscher 210, den bereits oben eingeführten vierten Wärmetauscher 220 sowie ein zweites Wärmeübertragungsmedium 270, bspw. Luft, beinhaltet. Der dritte Wärmetauscher 210 steht mit dem vierten Wärmetauscher 220 über das zweite Wärmeübertragungsmedium 270 in thermischem Kontakt.

Eine Vorrichtung zur Leistungseinspeisung 230 ist mit der zweiten thermoakustischen Maschine 200 bzw. mit deren Resonanzrohr 260 bspw. über eine Öffnung 280 derart gekoppelt, dass Druckschwankungen im zweiten Wärmeübertragungsmedium 270 erzeugt oder schon vorhandene Druckschwankungen verstärkt werden können. Die Vorrichtung zur Leistungseinspeisung 230 kann bspw. einen Kolben 231 und einen Zylinder 232 umfassen, wobei der Zylinder 232 an die Öffnung 280 im Resonanzrohr 260 angesetzt ist. Der Kolben 231 wird bspw. über eine Kurbelwelle 234 zur Erzeugung der Druckschwankungen in Richtung des Pfeils 233 bewegt, wobei die Kurbelwelle 234 in beliebiger Weise angetrieben wird. Entsprechende Vorrichtungen zum Antreiben einer Kurbelwelle bspw. mit Hilfe eines Motors sind hinlänglich bekannt. Alternativ kann die Vorrichtung zur Leistungseinspeisung 230 auch als Lautsprecher o.ä. ausgebildet sein. Wesentlich ist nur, dass Druckschwankungen im zweiten Wärmeübertragungsmedium 270 erzeugt werden können.

Der dritte Wärmetauscher 210 wird nun von einem dritten Medium mit hoher Temperatur durchflossen. Insbesondere wird der dritte Wärmetauscher 210 erfindungsgemäß über eine Zuleitung 211 wie der erste Wärmetauscher 110 mit der Abwärme des Kraftwerks 10, insbesondere mit heißem Rauchgas und/oder Dampf, gespeist. Hierzu ist die Zuleitung 211 mit der Abwärmeleitung 11 des Kraftwerks 10 verbunden.

Der vierte Wärmetauscher 220 wird von dem Arbeitsmedium durchflossen. Durch den im Zusammenhang mit der Figur 1b beschriebenen thermoakustischen Effekt wird erreicht, dass das Arbeitsmedium im vierten Wärmetauscher 220 gekühlt wird. Das am Ausgang des vierten Wärmetauschers 220 vorliegende verdichtete und gekühlte Arbeitsmedium wird ggf. über die weitere Kälteanlage 60 an die Abscheidevorrichtung 70 geleitet, wo schließlich das flüssige CO2 an einem Ausgang 9 der Abscheidevorrichtung 70 gewonnen wird. An einem zweiten Ausgang der Abscheidevorrichtung 70 sind CO2-arme Restgase entnehmbar.

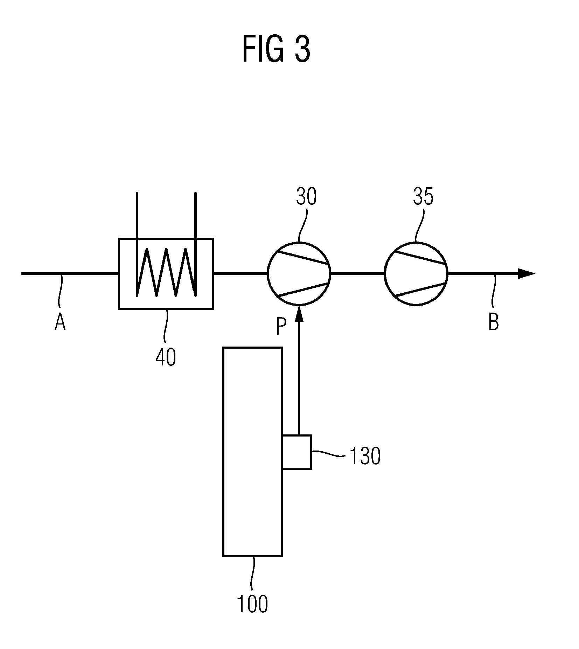

Je nach Zusammensetzung der Rauchgase kann bei der CO2-Verflüssigung auf die Abkühlung in der Kälteanlage 50 verzichtet werden. Unter der Voraussetzung, dass andere in den Rauchgasen ursprünglich vorliegende Verbrennungsprodukte wie Schwefeloxide (SOₓ) und/oder Stickstoff (N₂) bereits abgeschieden wurden, kann mit der in der Figur 3 vereinfacht dargestellten Vorrichtung CO2 verflüssigt werden. Konkret wird vorausgesetzt, dass die Rauchgase weniger als etwa 5% Stickstoff (N2) und Schwefeloxide (SOx) im niedrigen ppm-Bereich enthalten dürfen. Diese Voraussetzung wird auch beim sog. Oxyfuel-Verfahren erfüllt, wo ein Brennstoff unter reinem Sauerstoff verbrannt wird, so dass die Rauchgase sehr hohe CO2-Konzentrationen bei minimalsten "Verunreinigungen" durch andere Verbrennungsprodukte enthalten, wodurch die CO2-Abtrennung und die CO2-Verflüssigung wesentlich vereinfacht werden.

In der Figur 3 wird ein an einem Punkt A vorliegendes Arbeitsmedium bzw. Rauchgas, das die oben formulierte Voraussetzung erfüllt, in einen Trockner 40 geleitet, um insbesondere Wasser aus dem Arbeitsmedium zu entfernen. Von dort gelangt das Arbeitsmedium in einen Kompressor 30, der das Arbeitsmedium verdichtet. Die hierzu benötigte Arbeitsleitung P wird erfindungsgemäß mit Hilfe einer thermoakustischen Maschine 100' in einer Vorrichtung zur Leistungserzeugung 130 erzeugt. Die thermoakustische Maschine 100' und die Vorrichtung zur Leistungserzeugung 130 sind in der Figur 3 nur symbolisch abgebildet. Die thermoakustische Maschine 100' ist jedoch genauso ausgebildet wie die erste thermoakustische Maschine 100 der Figur 2 und arbeitet wie diese. Entsprechendes gilt für die Vorrichtung zur Leistungserzeugung 130. Ggf. kann das den Kompressor 30 verlassende Arbeitsmedium durch einen zusätzlichen Kompressor 35 weiter verdichtet werden. Am Punkt B liegt schließlich flüssiges CO2 vor.

Im Idealfall kann die CO2-Trennung bzw. die CO2-Verflüssigung mit der erfindungsgemäßen Lösung ohne zusätzliche Energieeinspeisung erfolgen. Grundsätzlich erlaubt die erfindungsgemäße Lösung eine erhebliche Senkung des Energieverbrauchs bei der CO2-Trennung oder -Verflüssigung.

## Patentansprüche

1. Verfahren zur Verflüssigung eines Arbeitsmediums, insbesondere zur CO2-Verflüssigung, für ein Kraftwerk (10) mit den Schritten
- Verdichten des zu zerlegenden Arbeitsmediums mit einem Kompressor (10),
- Abkühlen des im Kompressor (30) verdichteten Arbeitsmediums in einer Kälteanlage (50),
**dadurch gekennzeichnet, dass**
- zumindest ein Teil einer vom Kompressor (30) zum Verdichten des Arbeitsmediums benötigten Arbeitsleistung (P) von einer ersten thermoakustischen Maschine (100) erzeugt wird
und/oder
- eine zum Abkühlen des verdichteten Arbeitsmediums in der Kälteanlage (50) benötigte Kälte in einer zweiten thermoakustischen Maschine (200) erzeugt wird.

2. Verfahren nach Anspruch 1, **dadurch gekennzeichnet, dass** zumindest ein Teil einer in dem Kraftwerk (10) produzierten Abwärme, insbesondere Rauchgas und/oder Dampf, der ersten thermoakustischen Maschine (100) und/oder der zweiten thermoakustischen Maschine (200) zugeführt wird.

3. Verfahren nach Anspruch 1 oder 2, **dadurch gekennzeichnet, dass** die erste thermoakustische Maschine (100) einen ersten Wärmetauscher (110) und einen zweiten Wärmetauscher (120) beinhaltet, die über ein erstes Wärmeübertragungsmedium (170) in thermischem Kontakt stehen, wobei in dem ersten Wärmeübertragungsmedium (170) durch den thermoakustischen Effekt Druckschwankungen erzeugt werden, welche insbesondere über eine Öffnung (180) der ersten thermoakustischen Maschine (100) auf eine Vorrichtung zur Leistungserzeugung (130) wirken und dort in die vom Kompressor (30) zum Verdichten des Arbeitsmediums benötigte Arbeitsleistung (P) umgesetzt werden.

4. Verfahren nach Anspruch 3, **dadurch gekennzeichnet, dass** dem ersten Wärmetauscher (110) Abwärme des Kraftwerks (10) und dem zweiten Wärmetauscher (120) ein Kühlmittel zugeführt wird.

5. Verfahren nach Anspruch 3 oder 4, **dadurch gekennzeichnet, dass** die erzeugte Arbeitsleistung (P) über eine Leitung (7) an den Kompressor (30) übertragen wird.

6. Verfahren nach einem der vorhergehenden Ansprüche, **dadurch gekennzeichnet, dass** die zweite thermoakustische Maschine (200) einen dritten Wärmetauscher (210) und einen vierten Wärmetauscher (220) zur Kälteerzeugung beinhaltet, die über ein zweites Wärmeübertragungsmedium (270) in thermischem Kontakt stehen, wobei das Arbeitsmedium den vierten Wärmetauscher (220) durchläuft und dabei durch den thermoakustischen Effekt gekühlt wird.

7. Verfahren nach Anspruch 6, **dadurch gekennzeichnet, dass** dem dritten Wärmetauscher (210) Abwärme des Kraftwerks (10) zugeführt wird und eine Vorrichtung zur Leistungseinspeisung (230) insbesondere über eine Öffnung (280) der zweiten thermoakustischen Maschine (200) Druckschwankungen in dem zweiten Wärmeübertragungsmedium (270) erzeugt oder bereits vorhandene Druckschwankungen verstärkt.

8. Verfahren zur CO2-Abtrennung, bei dem
- ein CO2 enthaltendes Arbeitsmedium mit einem Verfahren nach einem der Ansprüche 1 bis 7 verflüssigt wird,
- das verflüssigte Arbeitsmedium in eine Abscheidevorrichtung (70) geleitet wird und
- in der Abscheidevorrichtung (30) das Arbeitsmedium in flüssiges CO2 und in ein CO2-armes Restmedium getrennt wird.

9. Vorrichtung zur Verflüssigung eines Arbeitsmediums, insbesondere zur CO2-Verflüssigung, für ein Kraftwerk (10) mit
- einem Kompressor (30) zum Verdichten des zu zerlegenden Arbeitsmediums und
- einer Kälteanlage (50) zum Abkühlen des im Kompressor (30) verdichteten Arbeitsmediums,
**gekennzeichnet durch**
- eine erste thermoakustische Maschine (100) zur Erzeugung zumindest eines Teils einer vom Kompressor (30) zum Verdichten des Arbeitsmediums benötigten Arbeitsleistung (P)
und/oder
- eine zweite thermoakustische Maschine (200) zur Erzeugung einer in der Kälteanlage (50) zum Abkühlen des verdichteten Arbeitsmediums benötigten Kälte.

10. Vorrichtung nach Anspruch 9, **dadurch gekennzeichnet, dass** eine Abwärmeleitung (11) des Kraftwerks (10) zum Ableiten zumindest eines Teils einer in dem Kraftwerk (10) produzierten Abwärme mit der ersten thermoakustischen Maschine (100) und/oder mit der zweiten thermoakustischen Maschine (200) verbunden ist.

11. Vorrichtung nach Anspruch 9 oder 10, **dadurch gekennzeichnet, dass**
- die erste thermoakustische Maschine (100) einen ersten Wärmetauscher (110) und einen zweiten Wärmetauscher (120) beinhaltet, die über ein erstes Wärmeübertragungsmedium (170) in thermischem Kontakt stehen, und
- eine Vorrichtung zur Leistungserzeugung (130) derart an die erste thermoakustische Maschine (100) gekoppelt ist, dass sich Druckschwankungen des ersten Wärmeübertragungsmediums (170) insbesondere über eine Öffnung (180) der ersten thermoakustischen Maschine (100) auf die Vorrichtung zur Leistungserzeugung (130) auswirken,
wobei die Vorrichtung zur Leistungserzeugung (130) ausgebildet ist, um die Druckschwankungen in die vom Kompressor (30) zum Verdichten des Arbeitsmediums benötigte Arbeitsleistung (P) umzusetzen.

12. Vorrichtung nach Anspruch 11, **dadurch gekennzeichnet, dass** eine Zuleitung (111) zum ersten Wärmetauscher (110) mit der Abwärmeleitung (11) verbunden ist und der zweite Wärmetauscher (120) über eine Zuleitung (121) mit einem Kühlmittel versorgt ist.

13. Vorrichtung nach Anspruch 11 oder 12, **dadurch gekennzeichnet, dass** die Vorrichtung zur Leistungserzeugung (130)
- gemeinsam mit dem Kompressor (30) als Linearkompressor ausgebildet ist oder
- Komponenten (131, 132, 134), insbesondere einen Kolben (131), einen Zylinder (132) und eine Kurbelwelle (134), beinhaltet, die zur Erzeugung der Arbeitsleistung (P) durch die Druckschwankungen in Bewegung versetzbar sind.

14. Vorrichtung nach einem der Ansprüche 11 bis 13, **dadurch gekennzeichnet, dass** die Vorrichtung zur Leistungserzeugung (130) zur Übertragung der erzeugten Arbeitsleistung (P) über eine Leitung (7) mit dem Kompressor (30) verbunden ist.

15. Vorrichtung nach einem der Ansprüche 9 bis 14, **dadurch gekennzeichnet, dass** die zweite thermoakustische Maschine (200) einen dritten Wärmetauscher (210) und einen vierten Wärmetauscher (220) zur Kälteerzeugung sowie ein zweites Wärmeübertragungsmedium (270) beinhaltet, wobei
- der dritte Wärmetauscher (210) über das zweite Wärmeübertragungsmedium (270) mit dem vierten Wärmetauscher (220) in thermischem Kontakt steht und
- der vierte Wärmetauscher (220) zum Abkühlen des Arbeitsmediums von dem Arbeitsmedium durchflossen ist.

16. Vorrichtung nach Anspruch 15**, dadurch gekennzeichnet, dass**
- eine Zuleitung (211) zum dritten Wärmetauscher (210) mit der Abwärmeleitung (11) verbunden ist und
- eine Vorrichtung zur Leistungseinspeisung (230) derart an die zweite thermoakustische Maschine (200) gekoppelt ist, dass Druckschwankungen des zweiten Wärmeübertragungsmediums (270) insbesondere über eine Öffnung (280) der zweiten thermoakustischen Maschine (200) erzeugt oder bereits vorhandene Druckschwankungen verstärkt werden.

17. Vorrichtung nach Anspruch 15 oder 16, **dadurch gekennzeichnet, dass** ein Eingang des vierten Wärmetauschers (220) mit einem Ausgang des Kompressors (30) verbunden ist.

18. Vorrichtung zur CO2-Abtrennung mit einer Vorrichtung zur Verflüssigung eines Arbeitsmediums nach einem oder mehreren der Ansprüche 9 bis 17 und mit einer Abscheidevorrichtung (70) mit einem Eingang, der mit einem Ausgang des vierten Wärmetauschers (220) verbunden ist, wobei die Abscheidevorrichtung (70) ausgebildet ist, um flüssiges CO2 von einem CO2-armen Restmedium zu trennen.
